# EUROPEAN PATENT APPLICATION

(11) **EP 0 880 243 A2**
(43) Date of publication of application: **25.11.1998**
(21) Application number: 98105975.1
(22) Date of filing: 01.04.1998
(51) Int. Cl.: H04B 10/12

(54) **Optical fiber transmission line**

(30) Priority: 21.05.1997 JP 130587/97
(71) Applicant: Kokusai Denshin Denwa Kabushiki Kaisha, Tokyo 163-03 (JP)
(72) Inventor: Taga, Hidenori, Shinjuku-ku, Tokyo 163-03 (JP); Edagawa, Noboru, Shinjuku-ku, Tokyo 163-03 (JP); Suzuki, Masatoshi, Shinjuku-ku, Tokyo 163-03 (JP); Yamamoto, Shu, Shinjuku-ku, Tokyo 163-03 (JP); Akiba, Shigeyuki, Shinjuku-ku, Tokyo 163-03 (JP)
(74) Representative: Schaumburg, Thoenes & Thurn

(57) **Abstract**

Two kinds of optical fibers having different effective cross-sectional areas connect between optical amplifying repeaters. The optical fiber having large effective cross-sectional area is connected to output side of optical amplifier and the optical fiber having small effective cross-sectional area is connected to input side of the optical amplifier.

## Description

### FIELD OF THE INVENTION

This invention relates to an optical fiber transmission line.

### BACK GROUND OF THE INVENTION

In a long-distance optical fiber amplifying repeating system, a main reason for deteriorating transmission characteristics is nonlinearity of an optical fiber. Assuming a secondary coefficient of a core refractive index of an optical fiber as n2 and an effective cross-sectional area as Aeff, it is said that a quantity of nonlinearity is proportional to n2/Aeff. Accordingly, for decreasing nonlinearity of an optical fiber, it needs to reduce n2 and/or enlarge an effective cross-sectional area. As n2 is a substantially characteristic constant and has a limitation to reduce, it has been tried mainly to enlarge an effective cross-sectional area Aeff.

An effective cross-sectional area Aeff, however, is closely related to other fiber parameters and, consequently, total transmission characteristics cannot be improved by simply extending an effective cross-sectional area Aeff. For example, if an effective cross-sectional area Aeff increases, a slope of a wavelength dispersion against a wavelength(referred as a dispersion slope hereinafter) gets larger. As a result, in a wavelength-division multiplexing transmission system, the difference of quantity of cumulative wavelength dispersion between signals becomes remarkably large.

Let's consider using an ordinary dispersion-shifted fiber(a dispersion slope is about 0.08 ps/km/nm/nm). When a signal bandwidth of wavelength-division multiplexing is set at 10 nm and a zero dispersion wavelength of a system is located in the middle of the bandwidth of 10 nm, the cumulative wavelength dispersion at both ends of a wavelength-division multiplexing signal after transmission of 9000 km becomes 3600 ps/nm. On the contrary, let's assume using a dispersion-shifted fiber of low nonlinearity that its effective cross-sectional area Aeff is expanded(a dispersion slope is about 0.14 ps/km/nm/nm). The cumulative wavelength dispersion at both ends of a wavelength-division multiplexed signal on the same condition becomes 6300 ps/nm.

That is, only increasing an effective cross-sectional area Aeff is not preferable as an arrangement of an optical fiber transmission system because quantity of cumulative wavelength dispersion to be equalized at receiving stations increases. Moreover, dispersion-compensative fibers have to be inserted at shorter intervals. When the means for compensating the differences of cumulative wavelength dispersions between wavelengths are provided at the same intervals, they must be those for compensating greater differences. If the means of the same performance are used, they have to be inserted more frequently.

### SUMMARY OF THE INVENTION

A purpose of the invention is to provide an optical fiber transmission line that the above-mentioned problems are all solved.

Namely, a purpose of the invention is to provide an optical fiber transmission line that both nonlinearity and a wavelength dispersion slope are decreased.

A further purpose of the invention is to provide an optical fiber transmission line contributive to an improvement of transmission characteristics of optical amplifying repeating system using wavelength-division multiplexing system.

In the invention, plural kinds of optical fibers having different effective cross-sectional areas are used and connected in order of the size, from large to small, of effective cross-sectional areas in series from input sides of signal lights to output sides of signal lights. That is, optical fibers having large effective cross-sectional areas are used in intensive parts of the signal lights and optical fibers having small effective cross-sectional areas are used at weak parts of the signal lights.

The optical fibers of the large effective cross-sectional areas have small nonlinear effect and they can keep the nonlinear effect small even if the signal lights are intensive. The optical fibers of the large effective cross-sectional areas have large wavelength dispersion slopes. However, it is possible to suppress an increase of cumulative wavelength dispersions and an increase of the difference of cumulative wavelength dispersions between wavelengths by connecting the optical fibers of small effective cross-sectional areas(that is, the optical fibers of small wavelength dispersion slopes) to their later stages. As the optical fibers of small effective cross-sectional areas are inserted to parts where the signal lights get weak, their actual nonlinear effect becomes small although their nonlinear coefficient is large.

By using the two kinds of optical fibers having the different effective cross-sectional areas, the sufficient effect(namely, the decrease of the nonlinear effect and the wavelength dispersion slope) are realized although the arrangement remains very simple.

An optical fiber transmission line of the invention is especially suitable for optically amplifying repeating systems. By employing an optically amplifying repeater using pumping light sources of the 0.98 µm band, it can amplify signal lights at low noise and contribute to improvement of transmission characteristics.

It is preferable that an optically amplifying repeater comprises a band eliminating filter for eliminating the 1.53 µm band from amplified lights and a gain equalizer for equalizing gains of an optical amplifier. Consequently, signal lights of the 1.55 µm band, especially, wavelength-division multiplexing signal lights having very little gain differences between wavelengths of wavelength-division multiplexing and amplified at low noise, can be obtained.

### BRIEF DESCRIPTION OF THE DRAWINGS

Fig. 1 is a schematic block diagram of an embodiment of the invention.

Fig. 2 is a schematic block diagram of an optical amplifying repeater 22 of the embodiment.

Fig. 3 is a schematic block diagram of pumping light sources of erbium-doped optical fibers 32a and 32b which are optical amplifying medium.

Fig. 4 is a schematic block diagram of another arrangement of pumping light sources of erbium-doped optical fibers 32a and 32b which are optical amplifying medium.

### DESCRIPTION OF THE PREFERRED EMBODIMENTS

Modes of the embodiments of the invention will be explained below referring to the drawings.

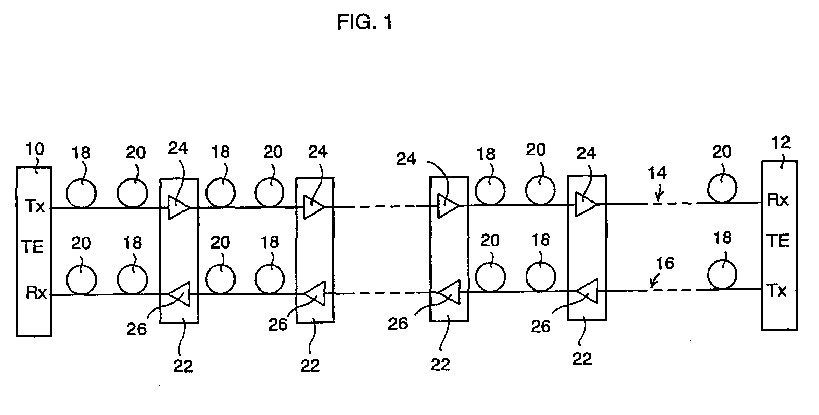

Fig. 1 shows a schematic block diagram of an embodiment of the invention. An up optical transmission line 14 for transmitting optical signals from a terminal station 10 toward a terminal station 12 and a down optical transmission line 16 for transmitting optical signals from the terminal station 12 toward the terminal station 10 are connected between the terminal stations 10 and 12. The each optical transmission lines 14 and 16 are optical fiber repeating amplifying transmission lines.

In the embodiment of the invention, two kinds of optical fibers 18 and 20 having different effective cross-sectional areas Aeff are used in the each optical transmission lines 14 and 16 and optical signals transmitting the optical fibers are repeated and amplified by optically repeating amplifiers 22. The optical repeating amplifiers 22 comprise up optical amplifiers 24 and down optical amplifiers 26. Optical fibers 18 having the large effective cross-sectional areas Aeff are connected to output sides of the optical amplifiers 24 and 26. Optical fibers 20 having the small effective cross-sectional areas Aeff are connected to input sides of the optical amplifiers 24 and 26.

The nonlinearity of optical fibers affects more prominent to optical signals of high intensity resulting remarkable deterioration of the optical signals. When intensity of the optical signals becomes low, however, it hardly affects the optical signals. Accordingly, in the embodiment of the invention, the optical fibers 18, having large effective cross-sectional areas Aeff and small nonlinear effect, are used immediately after optical amplification that the intensity of the optical signals gets higher. Then, the ordinary dispersion-shifted fibers 20 having small effective cross-sectional areas Aeff are used when the intensity of the optical signals gets declined to a certain degree.

In the embodiment, to make clearly understandable, two kinds of the optical fibers 18 and 20 having different effective cross-sectional areas are used. It is evident, however, that more than two kinds of the optical fibers can be used. That is to say, optical fibers having different effective cross-sectional areas Aeff are connected in series as the effective cross-sectional areas Aeff get smaller stepwise in the transmitting direction of an optical signal between repeating amplifiers.

As explained above, by combining plural optical fibers having different effective cross-sectional areas Aeff, it becomes possible not only making the nonlinear effect decreased but also making the dispersion slope declined on the whole.

To reconfirm the effect of the embodiment, we calculated numerically. Let's assume that an optical fiber transmission system of 9,000 km is optically repeated at intervals of 50 km by erbium-doped optical fiber amplifiers. For obtaining the effect that the optical fibers 18 having the large effective cross-sectional areas Aeff decline the nonlinearity, the optical signals, at least, still have to stay attenuated to 1/2(namely, the reduction of 3 dB). Hence, the length of the optical fibers 18 having the large effective cross-sectional areas Aeff must be no less than 3/(fiber loss) km. For example, in case that loss of the optical fiber 18 is 0.2 dB/km, the minimum length of the optical fiber 18 is 15 km.

Let's suppose that an effective cross-sectional area Aeff of the optical fiber 18 having the large effective cross-sectional area Aeff is 80 µm², the dispersion slope is 0.12 ps/km/nm/nm, an effective cross-sectional area Aeff of the ordinary dispersion-shifted fiber 20 is 50 µm², its dispersion slope is 0.07 ps/km/nm/nm, the bandwidth of a wavelength-division multiplexing optical signal is 10 nm and a zero dispersion wavelength is located in the middle of the bandwidth. Based on the assumption, equalizing quantity of wavelength dispersion necessary at a receiving end is calculated. Explained below are the results.

Supposing the optical fiber 18 is 15 km and the optical fiber 20 is 35 km, the average dispersion slope is 0.085 ps/km/nm/nm and equalizing quantity needed at a receiving end is 3825 ps.

Supposing the optical fiber 18 is 25 km and the optical fiber 20 is 25 km, the average dispersion slope is 0.095 ps/km/nm/nm and equalizing quantity needed at a receiving end is 4275 ps.

In case that the optical fiber 18 alone is used without the optical fiber 20, the average dispersion is 0.12 ps/km/nm/nm and equalizing quantity needed at a receiving end is 5400 ps.

The dispersion equalizing quantity needed at the receiving end becomes decreased by combining the optical fiber 18 having the large cross-sectional area Aeff and the dispersion-shifted fiber 20 having the ordinary effective cross-sectional area Aeff. If we can make the effective cross-sectional area Aeff of the optical fiber 18 larger, the effect would be more distinguished and the required dispersion equalizing quantity can be decreased leaving the average dispersion slope small.

In the above-mentioned embodiment, two kinds of optical fibers 18 and 20 having different effective cross-sectional areas Aeff are combined. However, combining more than two kinds of optical fibers having different effective cross-sectional areas Aeff is also adaptable. For example, 3 optical fibers that each effective cross-sectional areas are 110 µm², 80 µm² and 50 µm² and each dispersion slopes are 0.15 ps/km/nm/nm, 0.12 ps/km/nm/nm and 0.07 ps/km/nm/nm respectively can be connected in series in order of 10 km, 20 km and 20 km.

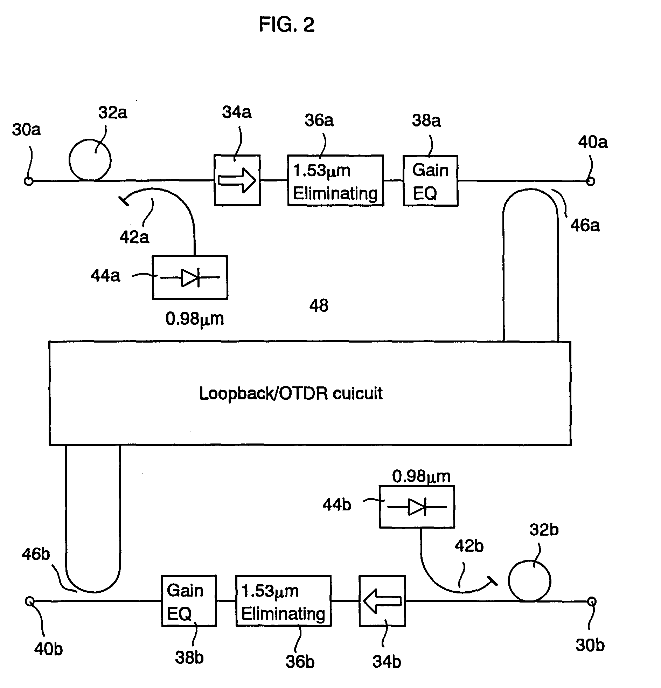

Explained below is an arrangement of the optically repeating amplifier 22. Fig. 2 shows a schematic block diagram of the amplifier 22. Both of the up and down systems are consisted of the same compositions. Numerals 30a and 30b denote input terminals. Output lights of the optical fibers 20 of the up optical transmission line 14 and the down optical transmission line 16 enter into the input terminals 30a and 30b respectively. Erbium-doped optical fibers 32a and 32b of optically amplifying mediums, optical isolators 34a and 34b for interfering lights that transmit in the opposite direction with optical signals, band rejection filters 36a and 36b for removing ASE(Amplified Spontaneous Emission) lights of 1.53 µm band and gain equalizing filters 38a and 38b for flattening gains of optical signal band are connected in series in that order. Output lights of the gain equalizing filters 38a and 38b are connected to output terminals 40a and 40b respectively and the output terminals 40a and 40b are connected to the optical fibers 18 of the up optical transmission line 14 and the down optical transmission line 16 respectively.

Wavelength-Division multiplexing(WDM) couplers 42a and 42b for introducing pumping lights for the erbium-doped optical fibers 32a and 32b are provided between the erbium-doped optical fibers 32a, 32b and the optical isolators 34a, 34b. Laser elements 44a and 44b for laser-oscillating at the 0.98 µm band are connected to the WDM couplers 42a and 42b as pumping light sources.

Couplers 46a, 46b are provided between the gain equalizing filters 38a, 38b and the output terminals 40a, 40b. The couplers 46a, 46b extract signal lights and reflected lights or backward scattered lights and turn them from the up transmission line to the down transmission line and the other way around. The couplers 46a and 46b are connected mutually through a loopback/OTDR(Optical Time Domain Reflectometry) circuit 48. The loopback/OTDR circuit 48 sometimes comprises purely an optical circuit and sometimes comprises an electronic circuit partially. In the latter, it becomes possible to inform conditions of each parts of the transmission line to the terminal stations 10, 12 according to orders from the terminal stations 10, 12.

In an optical amplifying repeater shown in Fig. 2, signal lights inputted to the input terminals 30a and 30b enter into the erbium-doped optical fibers 32a, 32b and optically amplified while they are transmitting. The erbium-doped optical fibers 32a, 32b are pumped by 0.98 µm lights provided from the laser elements 44a, 44b through the WDM couplers 42a, 42b. The 0.98 µm band pumping can amplify light signals of the 1.55 µm band at lower noise compared to the 1.48 µm band pumping.

The signal lights amplified at the erbium-doped optical fibers 32a, 32b pass through the optical isolators 34a, 34b and enter into the band rejection filters 36a, 36b. The band rejection filters 36a, 36b eliminate ASE lights of the 1.53 µm band from the optically amplified signal lights. The gain equalizing filters 38a, 38b equalize gains of the output lights of the band rejection filters 36a, 36b at a predetermined signal light band(that is, making the level of optical intensity of each signal wavelengths to be the same). The gain equalizing filters 38a, 38b comprise, for example, optical filter elements having set up transmittance wavelength characteristics for flattening gains of the erbium-doped optical fibers 32a, 32b in a predetermined signal light band. These optical filter elements of transmittance wavelength characteristics, concretely, can be realized by employing etalons of wide FSR.

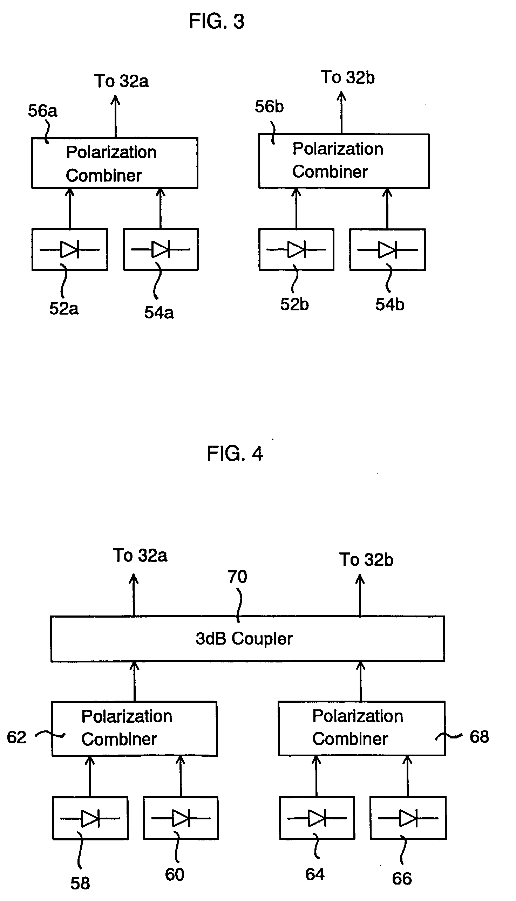

In Fig. 2, the pumping laser elements 44a and 44b are provided separately in the up and down systems. It is, however, also adaptable to pump the erbium-doped optical fibers 32a and 32b with the light which is obtained by the polarization-combining of outputs from two pumping light sources. Fig. 3 shows schematic block diagrams of the above-mentioned pumping means. Numerals 52a, 52b, 54a and 54b denote laser elements for laser-oscillating at the 0.98 µm band. The laser elements 52a, 52b and the laser element 54a, 54b are arranged as mutual polarization of output lights cross at right angles. Polarization combining circuits 54a and 56b combine output lights of the laser elements 52a, 52b and the laser elements 54a, 54b respectively remaining each polarization states. An output light of the polarization combining circuit 56a is supplied to the erbium-doped optical fiber 32a through the WDM coupler 42a and an output light of the polarization combining circuit 56b is supplied to the erbium-doped optical fiber 32b through the WDM coupler 42b.

Moreover, it is usable to provide two systems of arrangement for polarization-combining outputs from two pumping light sources and pump each of erbium-doped optical fibers 32a and 32b with two outputs that combined outputs of each of systems by 3 dB couplers. Fig. 4 shows a schematic block diagram of such pumping source. Numerals 58 and 60 denote laser elements for laser-oscillating at the 0.98 µm band and are arranged as mutual polarization of output lights cross at right angles. A polarization combining circuit 62 combines outputs of the laser elements 58 and 60 maintaining each polarization states. Numerals 64 and 66 denote also laser elements for laser-oscillating at the 0.98 µm band and are arranged as mutual polarization of output lights cross at right angles. A polarization combining circuit 68 combines output lights of the laser elements 64 and 66 remaining each polarization states. Output lights of the polarization combining circuits 62 and 68 are applied to each of inputs of a 3 dB coupler 70 having two inputs and two outputs, and the coupler 70 divides input to two portions and outputs them from two output ports. One output light of the 3 dB coupler 70 is supplied to the erbium-doped optical fiber 32a through the WDM coupler 42a and the other output light is supplied to the other erbium-doped optical fiber 32b through the WDM coupler 34b. By the 3 dB coupler, half of output light of the polarization combining circuit 62 is supplied to the erbium-doped optical fiber 32a and the remaining output light is supplied to the erbium-doped optical fiber 32b. Half of output light of the polarization combining circuit 68 is supplied to the erbium-doped optical fiber 32a and the remaining output light is supplied to the erbium-doped optical fiber 32b.

When any of the pumping light sources fails, the arrangement shown in Fig. 3 is more reliable to keep the desired optically amplifying ability(that is, has higher tolerance for faults) than the arrangement shown in Fig. 2 and the arrangement shown in Fig. 4 is even more reliable for failures than the arrangement shown in Fig. 3.

It will readily be understood from the foregoing description that the invention makes it possible to decrease both the wavelength dispersion slope and the nonlinear effect and improve the transmission characteristics. Especially, it brings a considerable improving effect by applying to wavelength-division multiplexing systems.

By employing two kinds of optical fibers having different effective cross-sectional areas, it becomes possible to get sufficient effect, namely, to realize decreases of the nonlinear effect and the wavelength dispersion slope.

The transmission characteristics can be even more improved when an optically amplifying repeating means with a pumping light source of the 0.98 µm band is used concurrently in optically amplifying repeating systems.

## Claims

1. An optical fiber transmission line comprising plural kinds of optical fibers having different effective cross-sectional areas wherein said optical fibers are connected in order of the size, from large to small, of the effective cross-sectional areas in series from an input side of a signal light to an output side of the signal light.

2. An optical fiber transmission line as defined in claim 1 wherein said plural kinds of optical fibers comprise two kinds of optical fibers having relatively large effective cross-sectional area and relatively small effective cross-sectional area and the optical fiber having relatively large effective cross-sectional area is provided to the input side of the signal light and the optical fiber having the relatively small effective cross-sectional area is provided to the output side of the signal light.

3. An optical fiber transmission line used in optically amplifying repeating systems wherein plural kinds of optical fibers having different effective cross-sectional areas are connected in order of size, from large to small, of effective cross-sectional areas in series in each repeating intervals.

4. An optical fiber transmission line as defined in claim 3 further comprising one or more optically amplifying repeaters for amplifying signal lights by using pumping lights of the 0.98 µm band.

5. An optical fiber transmission line as defined in claim 4 wherein said optically amplifying repeaters comprising:
an optical amplifying medium,
a pumping light source for generating pumping light for said optical amplifying medium,
an optical isolator for interfering lights transmitting in the opposite direction to a signal light for said optical amplifying medium,
a band rejecting filter for eliminating the 1.53 µm band from lights amplified by said optical amplifying medium, and
a gain equalizer for equalizing gains of said optical amplifying medium.

6. An optical fiber transmission system as defined in claim 3, 4 or 5 wherein said plural kinds of optical fibers consist of two kinds of optical fibers having relatively large effective cross-sectional area and relatively small effective cross-sectional area and the optical fiber having relatively large effective cross-sectional area is provided to an input side of a signal light and the optical fiber having the relatively small effective cross-sectional area is provided to an output side of a signal light.
